# EUROPÄISCHE PATENTANMELDUNG

(11) **EP 1 626 035 A1**
(43) Veröffentlichungstag der Anmeldung: **15.02.2006**
(21) Anmeldenummer: 05017181.8
(22) Anmeldetag: 07.08.2005
(51) Int. Cl.: C02F 1/64, C02F 1/74

(54) **Verfahren und Vorrichtung zur Entfernung oder Minderung oxidierbarer gelöster Stoffe aus dem Grundwasser unter Einsatz einer Wasser-/Wasser-Wärmepumpe**

(30) Priorität: 08.08.2004 DE 102004038612
(71) Anmelder: Winkelnkemper, Torsten, 59329 Wadersloh (DE)
(72) Erfinder: Winkelnkemper, Heinrich, 59329 Wadersloh (DE)
(74) Vertreter: Schneider, Uwe

(57) **Zusammenfassung**

Die Erfindung betrifft ein Verfahren zur Entfernung oder Minderung oxidierbarer gelöster Stoffe, insbesondere von Eisen und Mangan, aus dem Grundwasser zur Vermeidung von Ablagerungen und damit von Betriebsstörungen bei direkter Nutzung von Grundwasser für Wasser-Wasser-Wärmepumpen durch Einleitung von mit Sauerstoff angereichertem Wasser in den Grundwasserleiter. Hierbei arbeiten in einer Einfahrphase von mindestens 3 Brunnen (3, 4, 5) zunächst 2 Brunnen (3, 4, 5) wechselweise als Förder- und Infiltrationsbrunnen, wobei über den Förderbrunnen Grundwasser entnommen wird, von dem ein Teilstrom in einer primären Sauerstoffanreicherung (29) mit Sauerstoff angereichert und über den Infiltrationsbrunnen (3, 4, 5) in den Grundwasserleiter infiltriert wird, und gleichzeitig der Hauptstrom des entnommenen Wassers beim Durchströmen einer Wasser-Wasser-Wärmepumpe (2) für Heiz- und/oder Kühlzwecke genutzt wird, in einer sekundären Sauerstoffanreicherung (6) mit Sauerstoff angereichert und über einen als Schluckbrunnen dienenden Brunnen (3, 4, 5) in den Grundwasserleiter zurückgeführt wird, wobei im folgenden Dauerbetrieb dieser Schluckbrunnen (3, 4, 5) in den Funktionswechsel der Brunnen mit einbezogen wird, so dass jeder der Brunnen (3, 4, 5) im Wechsel Infiltrationsbrunnen, Förderbrunnen und Schluckbrunnen wird und zwischen den Funktionen als Schluckbrunnen und als Förderbrunnen ein entsprechender Temperaturausgleich im Grundwasserleiter im Bereich des jeweiligen Brunnens berücksichtigt wird.

## Beschreibung

Die Erfindung betrifft ein Verfahren und eine Vorrichtung zur unterirdischen Entfernung oder Minderung oxidierbarer gelöster Stoffe - insbesondere der Metalle Eisen und Mangan - aus dem Grundwasser unter Einsatz einer Wasser-Wasser-Wärmepumpe gemäß Oberbegriff des Anspruches 1.

Die unterirdische Enteisenung und/oder Entmanganung von Grundwasser (UEE) ist ein bekanntes, vielfach angewendetes Verfahren zur Entfernung/Minderung gelöster oxidierbarer Stoffe aus dem Grundwasser. Dabei werden als Nebeneffekt Verockerungen der Bohrbrunnen vorteilhaft vermieden. Bei diesem Verfahren wird eine Teilwassermenge mit Sauerstoff - vornehmlich aus der Umgebungsluft - angereichert und zeitlich außerhalb der Förderphase über die Brunnen in den Grundwasserleiter rückgeführt (infiltriert). Der eingetragene Sauerstoff bewirkt durch Oxidation leicht oxidierbarer Stoffe einen entsprechenden Aufbereitungsprozess. Dabei werden die Metalle Eisen und Mangan zu Feststoffverbindungen oxidiert und im Grundwasserleiter festgelegt. Über den Brunnen kann dann eine mehrfache Wassermenge schon aufbereitet aus dem Grundwasserleiter entnommen werden. Die Festlegung der Oxidationsprodukte im Grundwasserleiter außerhalb des unmittelbaren Brunnenbereiches verhindert eine Verockerung der Brunnen und trägt so entgegen ersten Annahmen deutlich zur Verlängerung der Lebensdauer der Bohrbrunnen bei, so dass diesbezüglich ein langfristig störungsfreier Betrieb von Wasser-Wasser-Wärmepumpen möglich wird.

Das Verfahren ist grundsätzlich anerkannt und beispielsweise nach der Technischen Regel DVGW-Arbeitsblatt W 223-3 vom Februar 2005 "Planung und Betrieb von Anlagen zur unterirdischen Aufbereitung" in den wesentlichen Verfahrensschritten normiert. Ebenfalls ist das Verfahren beispielsweise aus der DE 3543697 C2 bekannt. Zur Technik der unterirdischen Aufbereitung sei insbesondere auf diese beiden Quellen verwiesen. Wird im Folgenden von Enteisenung und Entmanganung gesprochen, so ist hiermit insgesamt immer diese Art der unterirdischen Aufbereitung durch Ausfällen mit Hilfe von Sauerstoff im Grundwasserleiter gemeint.

Der apparative Aufwand für die unterirdische Aufbereitung ist gering. Die Anlagen arbeiten im Wesentlichen fast wartungsfrei und unproblematisch und sichern daher über längere Zeiträume ein stabiles und sicheres Anlageverhalten. Je nach verlangtem Reinigungsvolumen werden derartige Aufbereitungsanlagen mit einem, zwei oder auch mehr Brunnen betrieben, wobei bei der Anlage mit nur einem Brunnen der Brunnen zeitlich versetzt als Infiltrationsbrunnen und als Förderbrunnen genutzt wird, weil eine zeitgleiche Förderung und Infiltration von mit Sauerstoff angereichertem Wasser nicht möglich ist. Daher wird der eine Brunnen - z.B. bei Haushalten - tagsüber und in einem Teil der Nacht als Förderbrunnen genutzt. In der Nacht, in den wasserverbrauchsschwächsten Stunden, wird auf den Betriebszustand Infiltrationsbrunnen umgeschaltet.

Bei zwei verwendeten Brunnen sind jeweils ein Brunnen als Infiltrationsbrunnen und ein Brunnen als Förderbrunnen gleichzeitig in Benutzung, wodurch ein gleichzeitiges Entnehmen von gereinigtem Wasser aus dem Grundwasserleiter und ein Infiltrieren über den anderen Brunnen mit sauerstoffhaltigem Wasser in den Grundwasserleiter möglich sind. Üblicherweise werden derartige Anlagen so geschaltet, dass nach einer gewissen Zeit oder nach einem gewissen Mengendurchsatz der Infiltrationsbrunnen zum Förderbrunnen wird und der Förderbrunnen zum Infiltrationsbrunnen. Entsprechende Schaltungen für Anlagen mit mehr als zwei Brunnen sind möglich.

Unabhängig von der Zahl der Bohrbrunnen, mit der die unterirdische Aufbereitung betrieben wird, ist die Einhaltung der im DVGW-Arbeitsblatt beschriebenen einzelnen Verfahrensschritte in Bezug auf die Sauerstoffanreicherung und die Infiltration des sauerstoffreichen Wassers in den Grundwasserfilter für eine wirkungsvolle Aufbereitung äußerst wichtig. Nach der Sauerstoffanreicherung, z.B. nach dem Injektorprinzip, ist der Austrag ungelöster Gase z.B. in einem Entgasungsbehälter vor der Infiltration in den Grundwasserfilter für den Aufbereitungsprozess wichtig. Die nahe liegende und vielfach versuchte direkte Einbringung von Luft in den Grundwasserleiter lässt wegen der sich bildenden Gasblasen und wegen des hohen unerwünschten Stickstoffanteils der Luft keine entsprechenden Aufbereitungsergebnisse zu.

Es ist weiterhin bekannt, geothermische Energie mit Hilfe von Wärmepumpen auf ein nutzbares Temperaturniveau sowohl für Heiz- als auch für Kühlzwecke zu bringen. Hierbei unterscheidet man:
- Wasser-Wasser-Wärmepumpen, bei denen der Wärmepumpe Grundwasser aus dem Grundwasserleiter über einen Förderbrunnen direkt zugeführt und danach mit verändertem Temperaturniveau über einen sogenannten Schluckbrunnen in entsprechender Entfernung in den gleichen Grundwasserleiter wieder zurückgeführt wird. Die Rückführung dieses Wassers in den Grundwasserleiter ist gesetzliche Vorschrift.
- Sole-Wasser-Wärmepumpen, bei denen Wärmetauscher ins Erdreich eingebracht werden, und zwar horizontal verlegt - als sogenannte Kollektoren oder - vertikal eingebracht als Sonden. In beiden Fällen zirkuliert Sole zur Wärmeübertragung vom Boden zur Wärmepumpe und ggf. umgekehrt. Bei vorwiegend für Heizzwecke genutztem Wärmepumpenbetrieb stellt sich bei Sole-Wasser-Wärmepumpen, bedingt durch die Abkühlung des Erdreichs im Bereich der Wärmetauscher und durch verbleibende Temperaturdifferenzen bei der Wärmeübertragung auf das Wärmetransportmedium Sole, ein deutlich niedrigeres Temperaturniveau am Eingang der Wärmepumpe ein als bei der Wasser-Wasser-Wärmepumpe.

Dementsprechend ist bei gleicher Heizleistung - z.B. bei Fußbodenheizungen mit 35°C Vorlauftemperatur - bei der Wasser-Wasser-Wärmepumpe ca. 20 % weniger Antriebsenergie für den Verdichter erforderlich.

Die für den Betrieb von Wasser-Wasser-Wärmepumpen nutzbaren Grundwässer sind jedoch mehrheitlich sogenannte reduzierte Wässer mit erhöhten Anteilen an gelöstem Eisen und/oder Mangan. Diese Stoffe reagieren dann zu Verockerungen in Pumpen, Rohrleitungen, Wärmetauschern und Brunnen. Die Praxis hat gezeigt, dass dabei insbesondere die Schluckbrunnen, über die das nach dem Durchgang durch die Wasser-Wasser-Wärmepumpe in seiner Wärmeenergie veränderte Wasser in den Grundwasserleiter rückgeführt wird, nach relativ kurzer Betriebszeit durch Verockerung verstopfen. Die Löslichkeit von Feststoffen im Wasser verringert sich bei sinkender Temperatur. Somit kann auch der Betrieb eines geschlossenen Systems ohne jede Sauerstoffzufuhr zum Wasser nicht vor einer Verockerung der Schluckbrunnen schützen. Regenerationen der Brunnen oder Neuerstellung derselben in relativ kurzen Abständen sind aufwändig und machen daher die Vorteile der Wasser-Wasser-Wärmepumpe zumindest teilweise zunichte.

Es ist schon praktiziert worden, die Wasser-Wasser-Wärmepumpe mit der unterirdischen Enteisenung und Entmanganung in der herkömmlichen Ausführung zu kombinieren. Diese Zusammenfassung bekannter Komponenten ist gegenüber der Sole-Wasser-Wärmepumpe schon ökologisch als auch ökonomisch vorteilhaft. Allerdings wird die o.a. ca. 20 %ige Energieeinsparung durch den Betrieb der Aufbereitung etwas geschmälert.

Aufgabe der vorliegenden Erfindung ist es daher, ein Verfahren zu beschreiben, bei dem mit geringem apparativem Aufwand die unterirdische Enteisenung und Entmanganung von Grundwasser mit den Verfahrensschritten nach der anerkannten Regel der Technik einen dauerhaft störungsfreien Betrieb von Wasser-Wasser-Wärmepumpen ermöglicht, ohne dass nennenswerter energetischer Aufwand für das Aufbereitungssystem entsteht und ohne dass Einbußen bei der Leistungszahl der Wärmepumpen hingenommen werden müssen.

Die Lösung der erfindungsgemäßen Aufgabe hinsichtlich des Verfahrens ergibt sich aus den gekennzeichneten Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung gemäß Anspruch 1 geht aus von einem grundsätzlich bekannten Verfahren zur Entfernung oder Minderung oxidierbarer gelöster Stoffe, insbesondere von Mangan und Eisen, aus dem Grundwasser durch Einleitung von mit Sauerstoff angereichertem Wasser in das Grundwasser. Derartige Verfahren sind Stand der Technik und sollen daher hier nur soweit beschrieben werden, wie dies für die Beschreibung der vorliegenden Erfindung von Notwendigkeit ist. Ein derartiges gattungsgemäßes Verfahren wird dadurch weiterentwickelt, dass in einem System mit einer Mehrzahl von mindestens drei Brunnen als Erstes in einer vorangehenden Einfahrphase zwei dieser Brunnen im kurzzeitigen Wechsel als Infiltrationsbrunnen und Förderbrunnen betrieben werden. Über den jeweiligen Förderbrunnen wird Grundwasser aus dem Grundwasserleiter entnommen, von dem ein Teilstrom in einer ersten primären Sauerstoffanreicherung mit Sauerstoff angereichert und über den Infiltrationsbrunnen in den Grundwasserleiter rückgeführt wird. Der eingebrachte Sauerstoff aktiviert den bekannten natürlichen Aufbereitungsprozess. Nach der Infiltration einer bestimmten Sauerstoffmenge und Förderung einer entsprechenden Wassermenge wird umgeschaltet. Der bisherige Förderbrunnen wird Infiltrationsbrunnen und der bisherige Infiltrationsbrunnen wird Förderbrunnen. Nach der Infiltration von mit Sauerstoff angereichertem Wasser kann nach dem Funktionswechsel der Brunnen eine mehrfache Wassermenge aufbereitet über den Förderbrunnen aus dem Grundwasserleiter entnommen werden, wobei allerdings eine gewisse Einarbeitungszeit des Systems zu berücksichtigen ist. Somit kann der Hauptstrom des geförderten Wassers bei nicht zu hohen Belastungen an Eisen und Mangan schon in der Anfangsphase für den Betrieb einer Wasser-Wasser-Wärmepumpe genutzt werden, während bei höher mit Eisen und Mangan belasteten Grundwässern das Wasser erst nach mehrmaligem Funktionswechsel von Infiltrations-/Förderbrunnen unproblematisch für den Betrieb der Wasser-Wasser-Wärmepumpe zu nutzen ist. In dieser Einfahrphase sollte eine relativ kurze Umschaltung der Brunnen von Infiltrationsbetrieb auf Förderbetrieb und umgekehrt erfolgen, damit möglichst schnell ein hoher Aufbereitungsgrad und damit eine geringe Eisen- und Manganbelastung des nachfolgenden Systems bewirkt wird.

Der Hauptförderstrom des jeweiligen Förderbrunnens wird beim Durchströmen einer Wasser-Wasser-Wärmepumpe hinsichtlich seiner enthaltenen Wärmeenergie verändert und in Durchströmungsrichtung vor und/oder nach der Wasser-Wasser-Wärmepumpe in einer sekundären Sauerstoffanreicherung mit Sauerstoff angereichert und über einen als Schluckbrunnen dienenden Brunnen aus der Mehrzahl von Brunnen in den Grundwasserleiter zurückgeführt. Nachdem in der ersten Einfahrphase das jeweils geförderte Wasser ausreichend im Eisen- und Mangangehalt reduziert ist, können die Funktionswechsel von Infiltrations- und Entnahmebrunnen auf längere Zeiten/größere Mengen eingestellt werden.

Danach wird die Betriebsweise geändert und der Schluckbrunnen in einen regelmäßigen Funktionswechsel mit einbezogen. Die sekundäre Sauerstoffanreicherung genügt jetzt vielfach für den Aufbereitungsprozess, so dass die für den Einfahrbetrieb genutzte primäre Sauerstoffanreicherung in den meisten Fällen außer Betrieb gesetzt werden kann. Somit wird jeder der Brunnen im Wechsel
- als Förderbrunnen für die Entnahme von aufbereitetem Wasser aus dem Grundwasserleiter,
- als Schluckbrunnen für die Rückführung des durch die Wasser-Wasser-Wärmepumpe in seiner Wärmeenergie veränderten und sekundär mit Sauerstoff angereicherten Wassers in den Grundwasserleiter und
- als Infiltrations-/Standby-Brunnen mit Ruhephase, in welcher ein weitgehender Temperaturausgleich im Grundwasserleiter erfolgt

betrieben.

Von diesem Zeitpunkt an übernimmt somit das einmal geförderte Grundwasser vorteilhaft zwei Funktionen:
- es transportiert die Erdwärme zur Wärmepumpe, und
- es transportiert den aus der Luft aufgenommenen Sauerstoff für den Aufbereitungsprozess in den Grundwasserleiter.

Durch dieses erfindungsgemäße Verfahren kann mit geringstem apparativen Aufwand die Aufbereitung des Grundwassers erfolgen. In der Einfahrphase mit konventionellem Betrieb der Anlage zur unterirdischen Enteisenung/Entmanganung von Grundwasser wird die o.a. Energieeinsparung geringfügig reduziert, weil die Teilwassermenge, die primär mit Sauerstoff angereichert wird, zusätzlich gefördert werden muss.

Nachdem erfindungsgemäß der Schluckbrunnen mit in den regelmäßigen Funktionswechsel einbezogen wird und mehrheitlich keine primäre Sauerstoffanreicherung mehr erfolgt, entfällt der Energieaufwand für eine zusätzliche Wasserförderung, so dass das Energieeinsparpotenzial der Wasser-Wasser-Wärmepumpe voll wirksam wird. Für die sekundäre Sauerstoffanreicherung genügt eine einfache Rieselbelüftung ohne nennenswerten energetischen Aufwand.

Weiterhin kann in weiterer Ausgestaltung im darauf folgenden Dauerbetrieb nach hinreichender Reduzierung des Eisen- und Mangangehaltes im jeweils geförderten Wasser die primäre Sauerstoffanreicherung reduziert oder ganz abgeschaltet werden und der Schluckbrunnen in den Funktionswechsel der Brunnen mit einbezogen wird, so dass jetzt jeder Brunnen im Wechsel als Förderbrunnen, Schluckbrunnen und Infiltrations-Standby-Brunnen betrieben wird, wodurch zwischen den Funktionen Schluckbrunnen und Förderbrunnen durch den Standby-Betrieb eine zeitlich ausreichende Phase für einen entsprechenden Temperaturausgleich im Grundwasserleiter im Bereich des jeweiligen Brunnens verbleibt und erforderlichenfalls noch primär mit Sauerstoff angereichertes Wasser eingebracht werden kann.

Es ist auch denkbar, dass durch dieses Verfahren genügend Wasser aufbereitet wird, dass zusätzlich zu dem benötigten Volumen für den Durchlauf durch die Wasser-Wasser-Wärmepumpe noch Wasser für Haushalt, Landwirtschaft, Gewerbe oder dergleichen in entsprechender Qualität verfügbar ist. Dabei kann die Regelung so ausgestattet werden, dass in Zeiten mit nur geringem Wärmepumpenbetrieb die konventionelle primäre Sauerstoffanreicherung mit betrieben wird, während in anderen Zeiten die sekundäre Sauerstoffanreicherung mehrheitlich allein die Aufbereitung bewirkt.

In einer ersten Weiterbildung des erfindungsgemäßen Verfahrens ist es somit denkbar, dass nach der vorangehenden Einfahrphase die primäre Infiltration von mit Sauerstoff angereichertem Wasser nach dem Verfahren zur unterirdischen Enteisenung und / oder Entmanganung eingestellt wird. Dies ist immer dann möglich, wenn die Wasserqualität des Grundwassers so beschaffen ist, dass ein durch die Wärmepumpe gefördertes Grundwasservolumen und die damit sekundär eingebrachte Sauerstoffmenge für eine Reinigung des Grundwassers ausreichen. Unter günstigen Aufbereitungsvoraussetzungen ist es sogar denkbar, dass allein die sekundär eingebrachte Sauerstoffmenge ausreicht, um entsprechend aufbereitetes Wasser für den Wärmepumpenbetrieb und für andere Zwecke verfügbar zu haben.

Es ist in anderer Ausgestaltung des erfindungsgemäßen Verfahrens ebenfalls denkbar, dass nach der vorangehenden Einfahrphase die primäre Infiltration von mit Sauerstoff angereichertem Wasser nach dem Verfahren zur unterirdischen Enteisenung und/oder Entmanganung weiter betrieben wird. Ein derartiger gemischter Betrieb kann notwendig sein, wenn die durch die sekundäre Sauerstoffanreicherung vor und/oder nach der Wärmepumpe eingebrachte Sauerstoffmenge für eine ausreichende Aufbereitung des Grundwassers nicht ausreicht oder auf Dauer nicht hinreichend ist, so dass ständig oder auch nur intermittierend eine konventionelle Anlage zur unterirdischen Aufbereitung von Grundwasser parallel betrieben wird. Dies kann insbesondere dann sinnvoll sein, wenn größere Grundwassermengen für andere Zwecke aufbereitet werden müssen und/oder die Wärmepumpe nicht kontinuierlich in Betrieb ist.

Vorteilhafterweise kann auch die Infiltration von primär mit Sauerstoff angereichertem Wasser nach dem Verfahren zur unterirdischen Enteisenung und/oder Entmanganung in gegenüber der Einfahrphase reduziertem Umfang weiter betrieben werden. Dabei kann in weiterer Ausgestaltung der reduzierte Umfang der Versorgung des Infiltrationsbrunnens mit mit Sauerstoff angereichertem Wasser nach dem Verfahren zur unterirdischen Enteisenung und/oder Entmanganung abhängig vom Ergiebigkeitsfaktor K_{E} der unterirdischen Aufbereitung gewählt werden. Der Ergiebigkeitsfaktor K_{E} ist hierbei ein Maß für das Verhältnis von der infiltrierten, mit Sauerstoff angereicherten Wassermenge zur geförderten aufbereiteten Wassermenge. Jede Verlagerung der Sauerstoffeinbringung von der primären Anreicherung und Infiltration zur sekundären Sauerstoffanreicherung und Rückführung über den Schluckbrunnen erspart zusätzliche Wasserförderung aus dem Grundwasserleiter und damit Energie.

In einer weiteren Ausgestaltung des erfinderischen Verfahrens werden insgesamt drei Brunnen benutzt, von denen jeweils über einen Schluckbrunnen das von der Wasser-Wasser-Wärmepumpe in seiner Wärmeenergie veränderte und sekundär mit Sauerstoff angereicherte Wasser in den Grundwasserleiter rückgeführt, über einen zweiten als Förderbrunnen betriebenen Brunnen von oxidierbaren gelösten Stoffen gereinigtes Wasser entnommen und der Wasser-Wasser-Wärmepumpe zugeführt und der dritte Brunnen in einer Phase des Temperaturausgleichs für den Grundwasserleiter als Standby-Brunnen ruht. Hierbei können in vorteilhafter Weise die drei Brunnen während der Förderphase reihum so in ihrer Funktion umgeschaltet werden, dass jeder Brunnen nach drei Umschaltungen einmal jede Funktion wahrgenommen hat. Es ist damit möglich, die Ausgleichsvorgänge im Untergrund für die Wärmeentnahme durch die Wasser-Wasser-Wärmepumpe gezielt und von Jahreszeiten unabhängig ablaufen zu lassen, da immer ein Brunnen als Standby-Brunnen ruht und dabei in dessen unmittelbarer Umgebung ein Temperaturausgleich in Richtung der natürlichen Grundwassertemperatur erfolgt. Bei der evtl. Infiltration von primär mit Sauerstoff angereichertem Wasser wird der Temperaturausgleich noch unterstützt.

Sofern keine Infiltration von primär mit Sauerstoff angereichertem Wasser erforderlich ist und sich der Infiltrationsbrunnen damit in einer Ruhephase im Standby befindet, sollten zusätzliche Wassermengen, die für Haushalt, Landwirtschaft, Gewerbe oder dgl. benötigt werden, bereits über diesen Brunnen aus dem Grundwasserleiter entnommen werden, um damit auf diese Weise den Temperaturausgleich zu beschleunigen. Die beiden anderen Brunnen werden dabei für den Betrieb der Wasser-Wasser-Wärmepumpe als Förderbrunnen für die Zuführung von aufbereitetem Wasser zur Wärmepumpe und als Schluckbrunnen zur Rückführung des in der Wärmeenergie veränderten Wassers genutzt, bis ein Signal einer Überwachungseinrichtung einen weiteren Wechsel der Funktion der einzelnen Brunnen auslöst.

In weiterer Ausgestaltung ist es denkbar, dass der Wechsel der Funktion der einzelnen Brunnen zeitabhängig oder auch mengenabhängig in Abhängigkeit von der entnommenen Wassermenge erfolgt. Ebenfalls ist es denkbar, dass die Umschaltung zwischen den einzelnen Funktionen jeweils nach einem im Wesentlichen erfolgten Temperaturausgleich des sich gerade in der Phase des Temperaturausgleichs befindlichen Standby-Brunnen erfolgen kann. Darüber hinaus ist es möglich, den Wechsel der Funktionen der einzelnen Brunnen durch mehrere Parameter - z.B. zeit- und mengenabhängig oder zeit- und temperaturabhängig - zu regeln, um die Vorteile der verschiedenen einzelnen Regelungsparameter miteinander zu kombinieren.

Eine weitere Ausgestaltung sieht vor, dass in der endgültigen Betriebsphase insgesamt nur zwei Brunnen benutzt werden, von denen jeweils einer als Schluckbrunnen arbeitet, über den das von der Wasser-Wasser-Wärmepumpe in seiner Wärmeenergie veränderte und sekundär mit Sauerstoff angereicherte Wasser in den Grundwasserleiter rückgeführt wird und aus dem anderen als Förderbrunnen dienenden Brunnen, über den von oxidierbaren gelösten Stoffen gereinigtes Wasser aus dem Grundwasserleiter entnommen und der Wasser-Wasser-Wärmepumpe zugeführt wird. Diese Zwei-Brunnen-Konfiguration stellt dabei die Mindestkonfiguration dar, mit der das erfindungsgemäße Verfahren ausgeführt werden kann. Hierbei ist immer über einen längeren Zeitraum einer der Brunnen als Schluckbrunnen aktiv, über den die von der Wärmepumpe veränderte und mit Sauerstoff beaufschlagte Wassermenge rückgeführt wird, so dass hier eine entsprechende Aufbereitung des Grundwassers im Bereich dieses Schluckbrunnens auftritt. Arbeitet diese Aufbereitung über eine längere Zeit, so werden in einem größeren Volumen an Grundwasser im Umfeld des Schluckbrunnens Eisen und Mangan entfernt oder gemindert, so das für die nachfolgende Entnahmezeit ein entsprechend großer Puffer an aufbereitetem Grundwasser zur Verfügung steht. Über den anderen Förderbrunnen wird dabei über einen längeren Zeitraum das in einer vorhergehenden Aufbereitungsphase gereinigte Grundwasser aus dem wie vorstehend beschrieben gebildeten Puffer im Grundwasserleiter entnommen, wobei dieses Grundwasser gleichzeitig die Wärmemenge beinhaltet, die in der Wasser-Wasser-Wärmepumpe dann genutzt werden kann. Hierbei ist es von Vorteil, wenn der Funktionswechsel zwischen den zwei Brunnen immer nach einem Temperaturausgleich des Grundwassers im Bereich des Schluckbrunnens, vorzugsweise einmal jährlich nach der Sommerpause, vorgenommen wird. Nach der Sommerpause sind entsprechende Ausgleichsvorgänge im Untergrund abgelaufen, wobei üblicherweise die Wasser-Wasser-Wärmepumpe während der Sommerzeit wenig oder gar nicht benutzt wird und daher keine Abkühlung des um den Entnahmebrunnen herum angeordneten Sediments, sondern eine Erwärmung durch Ausgleichsvorgänge mit der Umgebung des Brunnens stattgefunden hat. Hierdurch wurde aus umgebenden Bereichen entsprechende Wärme nachgeführt, die nun für die Entnahme genutzt werden kann. Diese Ausstattung ist bezüglich des Temperaturverhaltens insbesondere für Anlagen günstig, bei denen die Wärmepumpe im Sommer zur Kaltwassererzeugung genutzt wird und somit für die Rückführung ein Wasser mit höherem Temperaturniveau abgibt.

Den geringeren Investitionskosten dieser Minimallösung steht gegenüber, dass sie schlechter regelbar ist und die Umschaltung von Betrieb als Schluckbrunnen auf Förderbrunnen während des normalen Wärmepumpenbetriebes ohne ausreichende Ruhezeit für den Brunnen zum Temperaturausgleich anfänglich zu einer deutlichen Temperaturabsenkung am Eingang der Wärmepumpe und damit zu einer schlechteren Leistungszahl führt.

Eine weitere Ausgestaltung sieht vor, dass der Eintrag von Sauerstoff vor und/oder nach der Wasser-Wasser-Wärmepumpe in das die Wasser-Wasser-Wärmepumpe durchströmende Wasser nach dem Injektorprinzip, mittels Rieselbelüftung oder dgl. Verfahren vorgenommen wird. Hierzu ist dem Fachmann eine Reihe technischer Möglichkeiten grundsätzlich bekannt. Diese können entsprechend auch bei dem hier vorliegenden Verfahren angewendet werden, um kostengünstig und effektiv Sauerstoff in Wasser einzubringen. Alle derartigen Verfahren können bei dem hier erfindungsgemäß vorgeschlagenen Verfahren angewendet werden.

Von Vorteil ist es hierbei, wenn durch den Eintrag von Sauerstoff in Durchströmungsrichtung nach der Wasser-Wasser-Wärmepumpe das verbesserte Gas-Lösungsvermögen von Wasser bei niedrigeren Temperaturen genutzt und eine höhere Anreicherung des Wassers mit Sauerstoff als bei sonst üblicher Fördertemperatur des Wassers erreicht werden kann. Damit kann vielfach auch bei Grundwässern mit erhöhtem Sauerstoffbedarf für die Aufbereitung bei ausschließlich sekundärer Sauerstoffanreicherung eine ausreichende Aufbereitung des Grundwassers erreicht werden, da bei gleichem Aufwand mehr Sauerstoff in das Grundwasser eingebracht werden kann. Es muss allerdings berücksichtigt werden, dass sich die chemischen, katalytischen und biologischen Vorgänge zur Reduktion gelöster oxidierbarer Stoffe im Grundwasser bei niedrigerer Temperatur verlangsamen.

Generell ist es entweder denkbar, dass der Eintrag von Sauerstoff mittels des in der Umgebungsluft enthaltenen Sauerstoffs oder mittels technischen Sauerstoffs erfolgt.

In weiterer Ausgestaltung des Verfahrens ist es denkbar, dass der sekundäre Eintrag von Sauerstoff vor und/oder nach der Wasser-Wasser-Wärmepumpe in das die Wasser-/Wasser-Wärmepumpe durchströmende Wasser durch einen Bypass zur Sauerstoffanreicherung oder durch bewusst geringen Wirkungsgrad der Sauerstoffanreicherung reduziert wird, damit bei Grundwässern mit nur geringem Sauerstoffbedarf für die unterirdische Aufbereitung kein nachteiliger zu hoher Sauerstoffeintrag erfolgt.

Von Vorteil ist es weiterhin, wenn die Mehrzahl von Brunnen und die Einrichtung zur Durchführung eines Verfahrens zur unterirdischen Enteisenung und/oder Entmanganung sowie die Wasser-Wasser-Wärmepumpe derart miteinander funktional verbunden und verschaltbar sind, dass ohne Umbau ein Betrieb jedes Brunnens als Förderbrunnen, Infiltrationsbrunnen oder als Schluckbrunnen sowohl mit der Einrichtung zur Durchführung eines Verfahrens zur unterirdischen Enteisenung und/oder Entmanganung als auch mit der Wasser-/Wasser-Wärmepumpe realisiert werden kann. Hierdurch kann jede denkbare Betriebsweise einer Anlage zur Durchführung des Verfahrens realisiert werden, indem einfach entsprechende Stellventile in den Verbindungsleitungen geöffnet und geschlossen werden und damit ein anderer Durchfluss des Wassers durch die Anlagenteile erfolgt, so dass beispielsweise eine Umschaltung zwischen mehreren Brunnen auch kurzzeitig mit und/oder ohne Benutzereingriff möglich wird. Von Vorteil ist es selbstverständlich ebenfalls, wenn diese Anpassung automatisiert durch entsprechende Regel- und Steuereinrichtungen vorgenommen werden kann.

Ein weiterer Vorteil des Verfahrens ist es, dass das in erster Linie für den Betrieb der Wasser- Wasser-Wärmepumpe unterirdisch aufbereitete Grundwasser in der Regel Trinkwasserqualität hat. Somit kann das über den jeweiligen Förderbrunnen aus dem Grundwasserleiter entnommene Wasser sowohl für den Betrieb der Wasser-Wasser-Wärmepumpe als auch für Trinkwasserzwecke, Gewerbe, Landwirtschaft oder dergleichen genutzt werden. Damit erhöht sich die Wirtschaftlichkeit einer nach dem Verfahren betriebenen Anlage entsprechend, da eine separate Aufbereitung des Grundwassers in Trinkwasserqualität für andere Zwecke entfallen kann.

Darüber hinaus ist es durch die Entnahme vor oder hinter der Wärmepumpe möglich, dass das die Wasser-Wasser-Wärmepumpe durchströmende, über einen als Förderbrunnen dienenden Brunnen aus dem Grundwasserleiter entnommene Wasser vor bzw. nach dem Durchströmen der Wasser-Wasser-Wärmepumpe auf zwei unterschiedlichen Temperaturniveaus entnommen werden kann. Somit kann beispielsweise für industrielle Zwecke gekühltes Wasser in Durchströmungsrichtung hinter der Wärmepumpe entnommen werden, wohingegen Trinkwasser auf normalem Temperaturniveau vor der Wärmepumpe zur Verfügung steht.

Als wesentliche Betriebsweise ist davon auszugehen, dass die Wärmepumpe dem geförderten Wasser Wärmeenergie entnimmt und für Heizzwecke oder dgl. zur Verfügung stellt, selbstverständlich kann die Wärmepumpe dem geförderten Wasser Wärmeenergie hinzufügen und etwa im Sommer für Kühlzwecke oder dgl. Kälteanwendungen zur Verfügung stehen.

Weiterhin ist es denkbar, dass z.B. im Sommer das Grundwasser direkt ohne Betrieb einer Wärmepumpe für Kühlzwecke genutzt und über den jeweiligen Schluckbrunnen in den Grundwasserleiter zurückgeführt wird.

Die Erfindung umfasst weiterhin eine Vorrichtung zur Durchführung des Verfahrens gemäß Anspruch 1, aufweisend eine Einrichtung zur unterirdischen Enteisenung und/oder Entmanganung mit primärer Sauerstoffanreicherung einer Teilmenge des geförderten Wassers, eine Wasser-Wasser-Wärmepumpe sowie eine sekundäre Sauerstoffanreicherung, die vor und/oder nach der Wasser-Wasser-Wärmepumpe derart angeordnet ist, dass das die Wasser-Wasser-Wärmepumpe durchströmende Wasser ganz oder teilweise mit Sauerstoff angereichert und dann über den Schluckbrunnen in den Grundwasserleiter zurückgeführt wird.

Eine bevorzugte Ausführungsform einer Anlage zur Durchführung des erfindungsgemäßen Verfahrens zeigt die Zeichnung.

Es zeigen:

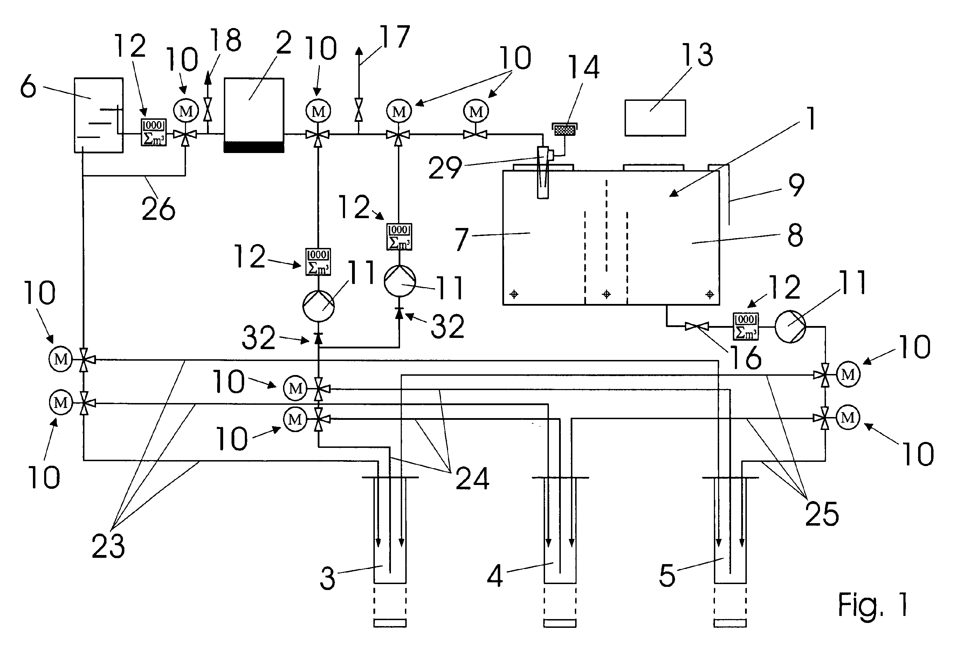

- Figur 1: - eine grundsätzliche Prinzipskizze des konstruktiven Aufbaus einer Vorrichtung zur Durchführung des erfindungsgemäßen Verfahrens mit allen funktionalen Bauelementen,

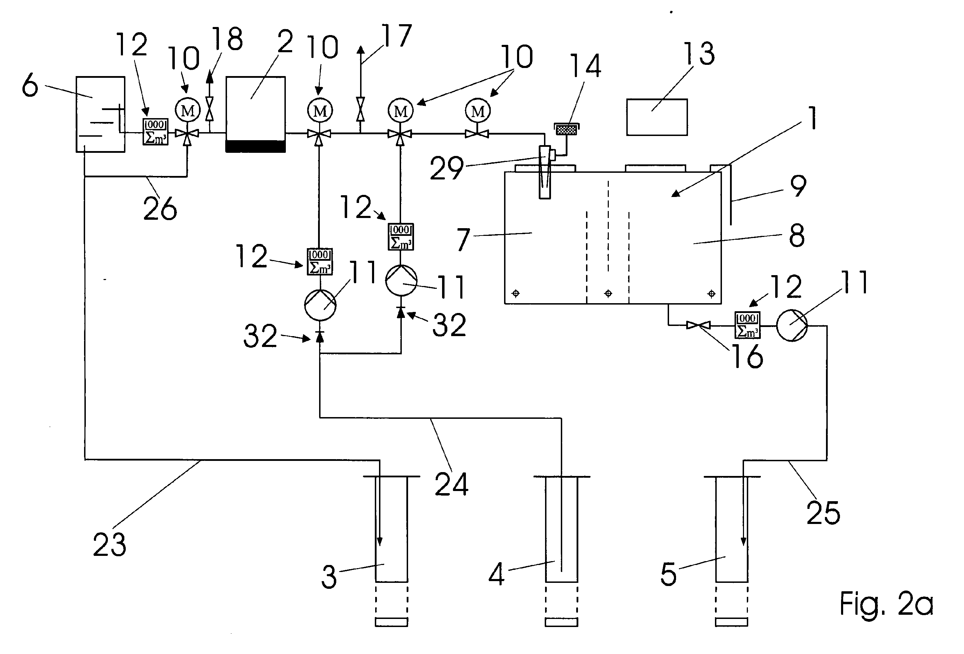

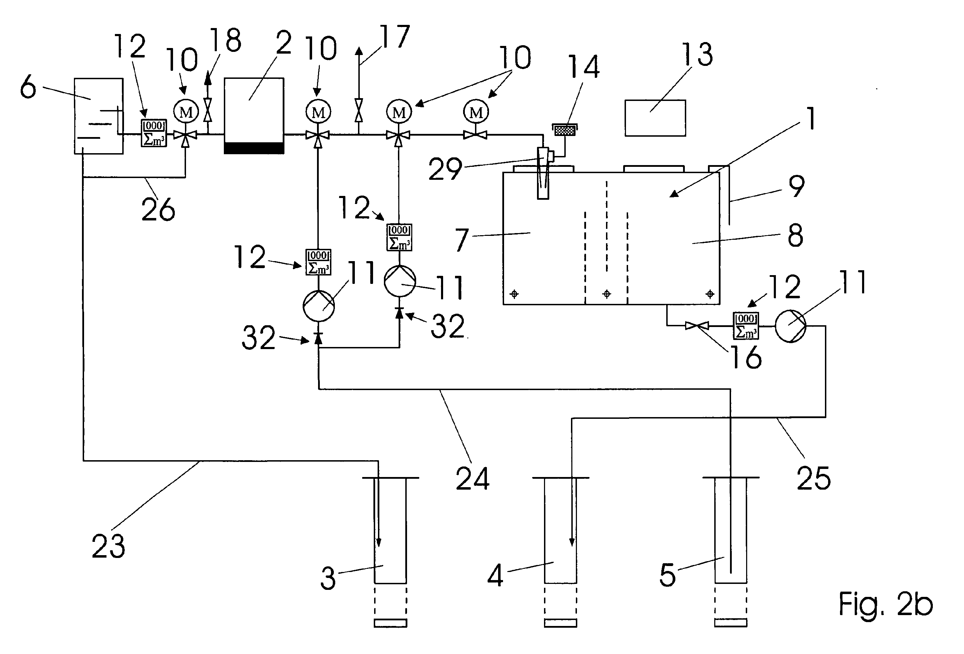

- Figur 2a, 2b -: die Vorrichtung zur Durchführung des erfindungsgemäßen Verfahrens gemäß Figur 1 in zwei Schaltzuständen während einer der möglichen Einfahrphasen zu Beginn der Nutzung der Wasser-Wasser-Wärmepumpe,

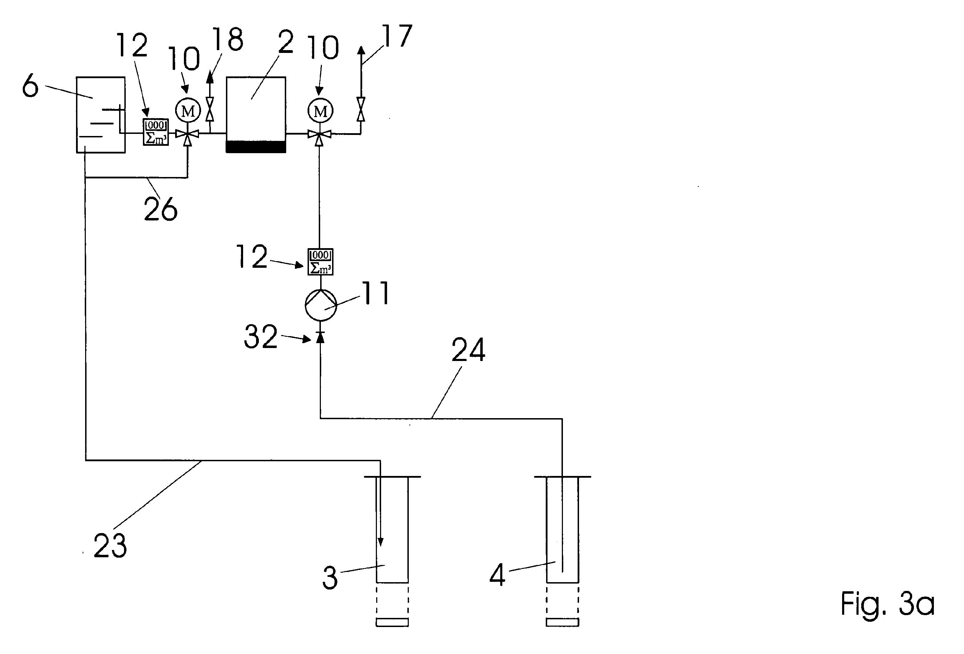

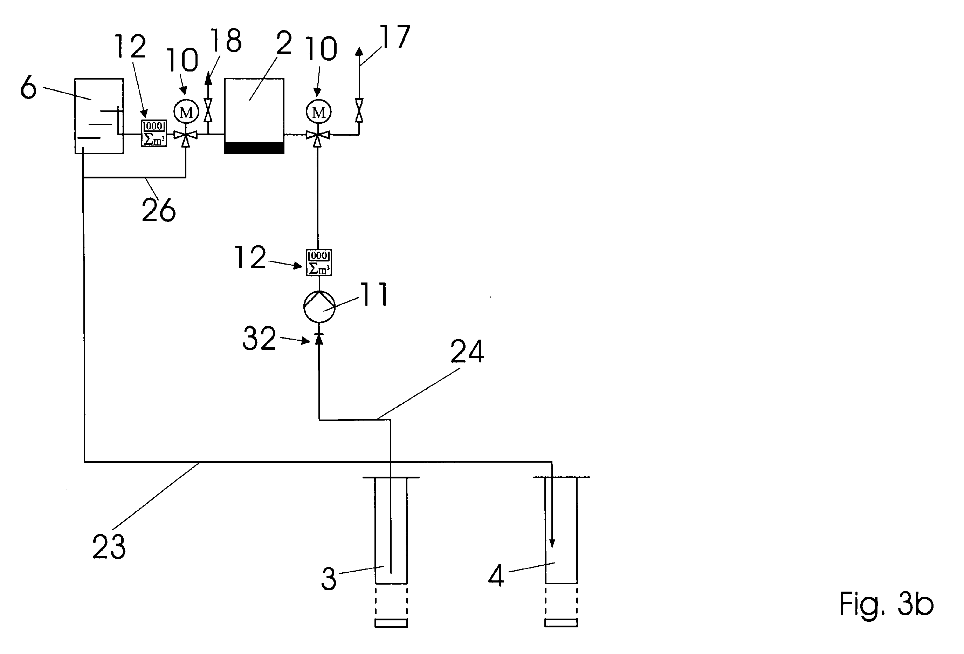

- Figur 3a, 3b -: alleiniger Betrieb einer Minimalkonfiguration der Vorrichtung gemäß Figur 1 mit nur zwei genutzten Brunnen, über die abwechselnd Wasser gefördert, durch eine sekundäre Sauerstoffanreicherung vor und/ oder nach der Wasser-Wasser-Wärmepumpe mit Sauerstoff angereichert und wieder in den Grundwasserleiter eingetragen wird,

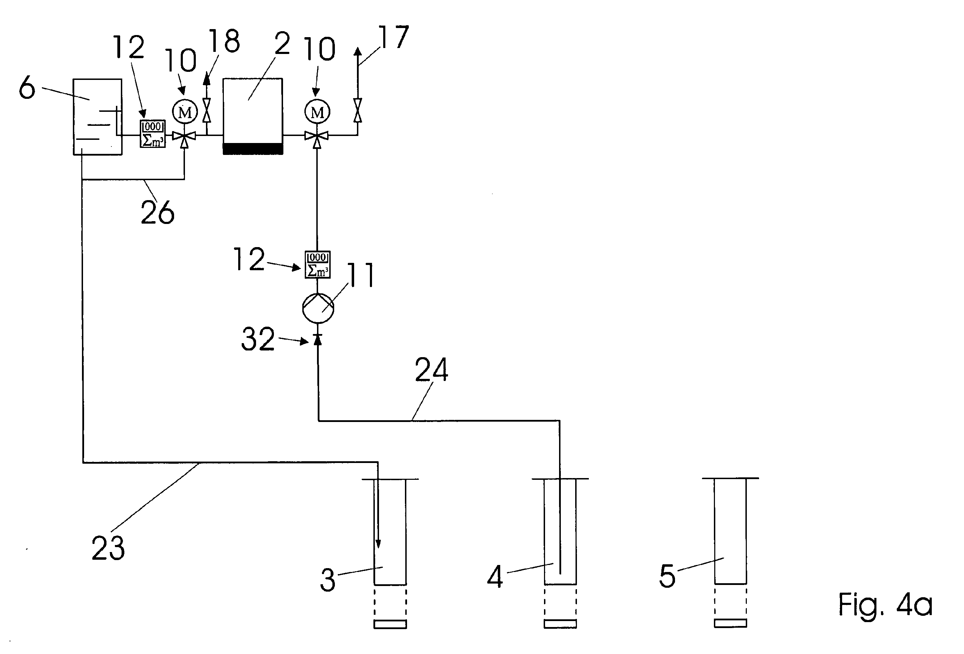

- Figur 4a-4c -: alleiniger Betrieb einer anderen Konfiguration der Vorrichtung gemäß Figur 1 mit drei reihum genutzten Brunnen, wobei nur in der sekundären Sauerstoffanreicherung vor und/oder nach der Wasser-Wasser-Wärmepumpe Wasser mit Sauerstoff angereichert und über einen der Brunnen in den Grundwasserleiter eingetragen wird,

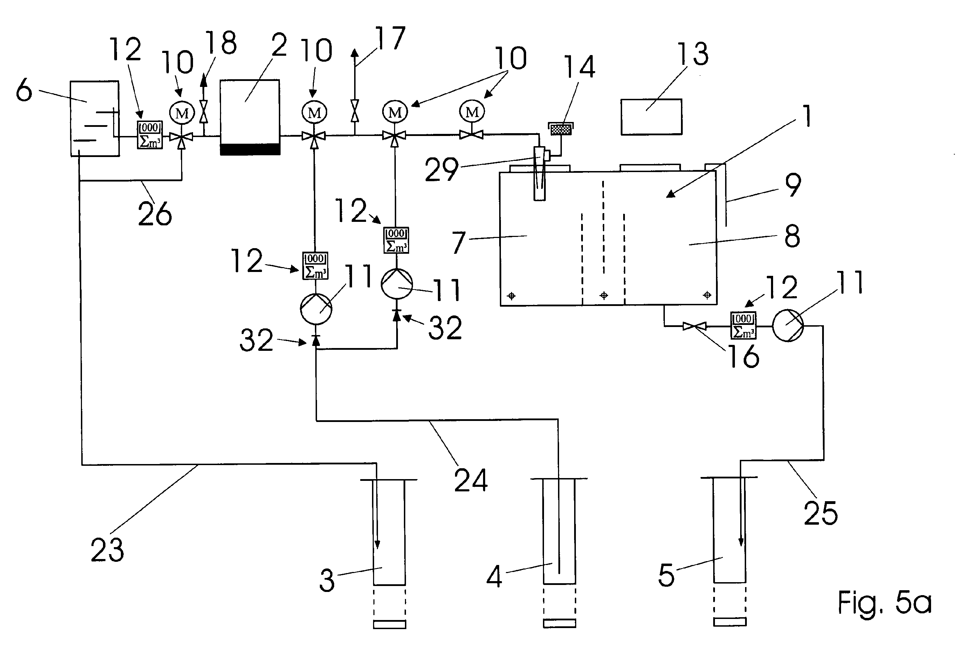

- Figur 5a-5c -: kombinierter Betrieb einer weiteren Konfiguration der Vorrichtung gemäß Figur 1 mit drei reihum genutzten Brunnen und paralleler Beschickung des Grundwasserleiters mit Sauerstoff mit einer Teilwassermenge über die primäre Sauerstoffanreicherung der unterirdischen Aufbereitungsvorrichtung über einen der Brunnen sowie der Hauptmenge über die sekundäre Sauerstoffanreicherung vor und/ oder nach der Wasser-Wasser-Wärmepumpe über einen anderen Brunnen.

In der Figur 1 ist in einer funktionalen Darstellung das Prinzipbild und das Schaltschema einer erfindungsgemäßen Vorrichtung zur Durchführung des Verfahrens dargestellt, bei dem sowohl eine insgesamt mit 1 bezeichnete Anlage für die unterirdische Aufbereitung von Grundwässern mit einer primären Sauerstoffanreicherung 29 als auch eine Wasser-Wasser-Wärmepumpe 2 mit in diesem Fall nachgeschalteter sekundärer Sauerstoffanreicherung 6 für den Betrieb mit den Brunnen 3, 4, 5 dargestellt ist. Die Vorrichtung erlaubt über eine Anzahl von Leitungen 23, 24, 25 sowie Anordnungen von z.B. elektromotorisch umschaltbaren Ventilen 10 und Pumpen 11 eine fluidische Zuordnung aller Brunnen 3, 4, 5 zu der Aufbereitungsanlage 1 mit ihrer primären Sauerstoffanreicherung 29 bzw. Wasser-Wasser-Wärmepumpe 2 mit der nach geschalteten sekundären Sauerstoffanreicherung 6, die im weiteren in den Figuren 2 bis 5 in schematischer Weise hinsichtlich der Verschaltung der einzelnen Bauelemente in verschiedenen Konfigurationen näher spezifiziert sind. Die in der Figur 1 angegebenen Bauteile und die zugehörigen Sachnummern gelten ebenfalls für die Figuren 2 bis 5, so dass diese einzelnen Sachnummern primär zu der Figur 1 erläutert werden und in den Figuren 2 bis 5 lediglich die jeweilige Verschaltung unter Zusammenwirken der in den verschiedenen Konfigurationen vorhandenen Bauteile erläutert wird.

Mit der Vorrichtung erfolgt die Entnahme von Wasser aus dem Grundwasserleiter über jeweils einen der Brunnen 3, 4, 5, über eine der Leitungen 24 und über Stellventile 10, Zähler 12, Rückflussverhinderer 32 und Pumpen 11 zu weiteren Stellventilen 10, in denen der geförderte Wasserstrom aufgeteilt und/oder umgeschaltet werden kann.

Für einen in der Regel kleineren Teilstrom weist die Vorrichtung eine grundsätzlich bekannte Anlage zur unterirdischen Aufbereitung von Grundwasser 1 auf, in der nach einem fernbetätigten Ventil 10 in einer als Injektor 29 ausgebildeten primären Sauerstoffanreicherung in die Teilwassermenge über ein Luftfilter 14 angesaugte Luft im Überschuss eingetragen und das Gemisch in eine erste Kammer 7 geleitet wird. Von dort wird das Wasser unter Austrag des Luftüberschusses über die Entlüftung 9 in die nächste Kammer 8 geführt und im jetzt mit Sauerstoff angereicherten Zustand mittels einer Rohrleitung 25 über ein Absperrorgan 16, einen Zähler 12, eine Pumpe 11 (wenn erforderlich) und Stellventile 10 über einen der Brunnen 3, 4, 5 in den Grundwasserleiter infiltriert. Gleichzeitig kann der andere Teil oder die Gesamtmenge des geförderten Wassers die Wasser-Wasser-Wärmepumpe 2 durchströmen, wird dabei in seiner Wärmeenergie verändert und anschließend nach einem Zähler 12 in der sekundären Sauerstoffanreicherung 6 ganz oder teilweise mit Sauerstoff angereichert und über Stellventile 10 mittels einer Rohrleitung 23 über einen der Brunnen 3, 4, 5 in den Grundwasserleiter zurückgeführt. Mit einer Bypass-Vorrichtung mit einem Stellventil 10 und der Rohrleitung 26 kann die eingetragene Sauerstoffmenge reguliert werden.

Die sekundäre Sauerstoffanreicherung 6 kann durch einfache Rieseltechnik oder nach dem Injektionsprinzip oder sonstigen dem Fachmann vertrauten Prinzipien bewirkt werden, wobei vorteilhaft Sauerstoff aus der Umgebungsluft genutzt wird, aber auch der Einsatz von technischem Sauerstoff möglich ist. Die Anordnung der sekundären Sauerstoffanreicherung 6 erfolgt normalerweise vorteilhaft nach der Wasser-Wasser-Wärmepumpe 2, um das bessere Gaslösevermögen des Wassers bei meistens niedrigeren Temperaturen zu nutzen, wobei eine Installation vor der Wasser-Wasser-Wärmepumpe 6 auch denkbar ist, ohne dass sich die nachfolgend beschriebenen Funktionen ändern.

Vor und nach der Wasser-Wasser-Wärmepumpe 2 sind zwei Entnahmestellen 17 und 18 angeordnet, aus denen gefördertes aufbereitetes Wasser - etwa für Trinkwasserzwecke, landwirtschaftliche und gewerbliche Nutzung oder dergleichen - entnommen werden kann. Hierbei liegt die Entnahmestelle 17 vor der Wasser-Wasser-Wärmepumpe 2 und erlaubt die Entnahme von Wasser auf dem normalen Temperaturniveau als Teil des geförderten Wassers. Die Entnahmestelle 18 liegt hinter der Wasser-Wasser-Wärmepumpe 2 und erlaubt die Entnahme von in der Wärmeenergie verändertem Wasser mit in den meisten Fällen geringerem Temperaturniveau. Beim Einsatz der Wasser-Wasser-Wärmepumpe 2 für Kühlzwecke kann jedoch auch Wasser mit höherem Temperaturniveau entnommen werden.

Die Leitungen 23, 24, 25, 26 sind über elektromotorische Stellventile 10 so mit anderen Bauteilen der Vorrichtung verbunden, dass jeder der Brunnen 3, 4, 5 entweder als Förderbrunnen, über den Wasser aus dem Grundwasserleiter gefördert wird, oder als Infiltrationsbrunnen, über den primär mit Sauerstoff angereichertes Wasser in den Grundwasserleiter infiltriert wird oder als Schluckbrunnen, über den Wasser, das in der Wasser-Wasser-Wärmepumpe 2 in der Wärmeenergie verändert und in der sekundären Sauerstoffanreicherung 6 ganz oder teilweise mit Sauerstoff angereichert wurde, in den Grundwasserleiter rückgeführt wird, betrieben und ein entsprechender Durchlauf des Wassers durch die Vorrichtung gewährleistet werden kann. In den Figuren 2 bis 5 sind dann nur noch diejenigen Leitungen eingezeichnet, die für den entsprechenden Betriebszustand der Vorrichtung von Belang sind, um die verschiedenen Betriebszustände klarer herausarbeiten zu können.

In den Figuren 2a und 2b sind die Betriebszustände der erfindungsgemäßen Vorrichtung während einer Einfahrphase mit allen drei Brunnen 3, 4, 5 dargestellt. Figur 2a zeigt: Bei einer Förderung von Grundwasser über Brunnen 4, die Leitung 24, einen oder zwei Zähler 12, eine oder zwei der Pumpen 11 und ein oder zwei Stellventile 10 wird der Förderstrom aufgeteilt, so dass ein Teilstrom über ein motorisch betriebenes Absperrorgan 10 dem Injektor 29 mit Luftsieb/Filter 14 zugeführt und hier mit Luftsauerstoff im Überschuss angereichert wird. Nach dem Austrag überschüssiger Luft in der Anlage 1 wird das mit Sauerstoff angereicherte Wasser über ein Absperrorgan 16, einen Zähler 12, eine Pumpe 11, die Leitung 25 und den Brunnen 5 in den Grundwasserleiter infiltriert. Der mitgeführte Sauerstoff aktiviert einen natürlichen Aufbereitungsprozess durch Oxidation der gelösten Metalle zu Feststoffpartikel, die dann im Grundwasserleiter festgelegt werden.

Die andere Teilwassermenge wird in der Wasser-Wasser-Wärmepumpe 2 in seiner Wärmeenergie verändert und nach einem Regelorgan 10 und einem Zähler 12 ganz oder teilweise in einer sekundären Sauerstoffanreicherung 6 mit Sauerstoff aus der Umgebungsluft angereichert und über Leitung 23 und Bohrbrunnen 3 in der Funktion als Schluckbrunnen in den Grundwasserleiter rückgeführt.

Der in diesem Schema dargestellte Parallelbetrieb von zwei Pumpen 11 für die Wasserförderung berücksichtigt, dass davon auszugehen ist, dass mehrheitlich deutlich unterschiedliche Wasserdrücke und Wassermengen für den Betrieb der Wasser-Wasser-Wärmepumpe 2 und den Betrieb der Anlage zur unterirdischen Enteisenung und Entmanganung 1 erforderlich sind. Der Betrieb mit nur einer Pumpe 11 ist denkbar.

Damit sich das Aufbereitungssystem in relativ kurzer Zeit möglichst gut einarbeitet, werden die Funktionen der Brunnen 4 und 5 in relativ kurzem zeitlichen Abstand von einigen Stunden oder wenigen Tagen gewechselt. Dabei kann die Umschaltung rein zeitlich aber auch in den meisten Fällen vorteilhafter mengenabhängig nach den in den Zählern 12 gemessenen Werten erfolgen. Nach dem Wechsel wird gemäß Figur 2b über den Brunnen 5 Grundwasser gefördert und über Brunnen 4 primär mit Sauerstoff angereichertes Wasser in den Grundwasserleiter infiltriert. Während der Einfahrphase kann das Grundwasser bei nicht zu hohen Gehalten an Eisen und Mangan schon mit Beginn der Einfahrphase für den Wärmepumpenbetrieb genutzt werden. Bei hohen Gehalten an Eisen und Mangan im Grundwasser sollte in den ersten Tagen der Einfahrphase eine Teilwassermenge ohne Betrieb der Wasser-Wasser-Wärmepumpe 2 und ohne den Betrieb der sekundären Sauerstoffanreicherung 6 abgeleitet werden.

Der Brunnen 3 bleibt zunächst in der Funktion als Schluckbrunnen für die Rückführung der in seiner Wärmeenergie veränderten und sekundär ganz oder teilweise mit Sauerstoff angereicherten Teilwassermenge in den Grundwasserleiter. Ein kurzfristiger Funktionswechsel dieses Brunnens 3 ohne ausreichend Zeit für einen Temperaturausgleich im Grundwasserleiter könnte zu sogen. "kalten Schlägen" in der Wärmepumpe führen.

Nach einem ersten Einfahrbetrieb ist der zeit-/mengenabhängige Funktionswechsel der Bohrbrunnen 4 und 5 soweit zu verlängern, bis ein Dauerbetrieb gemäß Beschreibung zu den nachfolgenden Figuren gefahren werden kann.

Bei dem Betrieb gemäß Figur 3a und 3b werden z.B. die Aufbereitungsanlage 1 mit der primären Sauerstoffanreicherung und Brunnen 5 nicht mehr betrieben.

In Figur 3a wird Grundwasser über den Brunnen 4, Leitung 24, Zähler 12 und Pumpe 11 zur Wärmepumpe 2 gefördert, in seiner Wärmeenergie verändert und nach einem Regelorgan 10 und einem Zähler 12 in einer sekundären Sauerstoffanreicherung 6 ganz oder teilweise mit Sauerstoff angereichert, über die Leitung 23 und über Brunnen 3 als Schluckbrunnen in den Grundwasserleiter zurückgeführt.

Nach einer entsprechenden Betriebszeit bzw. einem entsprechenden Mengendurchsatz in dieser Konfiguration wird umgeschaltet und nach Figur 3b im Prinzip in gleicher Weise über Brunnen 3 Grundwasser gefördert und das in der Wärmeenergie veränderte und ganz oder teilweise mit Sauerstoff angereicherte Wasser über Brunnen 4 als Schluckbrunnen in den Grundwasserleiter zurückgeführt. Bei dieser Betriebsschaltung mit nur 2 Brunnen sollte jedoch während der Umschaltung eine ausreichend lange Zeit für einen Temperaturausgleich im Grundwasserleiter verfügbar sein, in der z.B. die Wärmepumpe 2 nicht betrieben wird oder in der die Wärmepumpe 2 im Kühlbetrieb gefahren und somit über den jeweiligen Schluckbrunnen 3, 4 erwärmtes Wasser rückgeführt wurde. Hier ist eine Umschaltung z.B. außerhalb der Heizperiode denkbar. Für eine entsprechende Unabhängigkeit von z.B. längeren Betriebsunterbrechungen der Wärmepumpe 2 für den Wärmeausgleich bietet sich ein Betrieb nach Figur 4a bis 4c an.

In Figur 4a wird über Brunnen 4, Leitung 24, Zähler 12, Rückflussverhinderer 32 und Pumpe 11 Grundwasser zur Wasser-Wasser-Wärmepumpe 2 gefördert und nach der Veränderung der Wärmeenergie nach einem Regelorgan 10 und einem Zähler 12 in der sekundären Sauerstoffanreicherung 6 ganz oder teilweise mit Sauerstoff aus der Umgebungsluft angereichert und über Leitung 23 und Brunnen 3 in den Grundwasserleiter zurückgeführt. Brunnen 5 ist als Standby-Brunnen in Ruhestellung, aber betriebsbereit. In dieser Ruhephase befindet sich der Grundwasserleiter im Bereich dieses Brunnens 5 vorteilhaft im Temperaturausgleich.

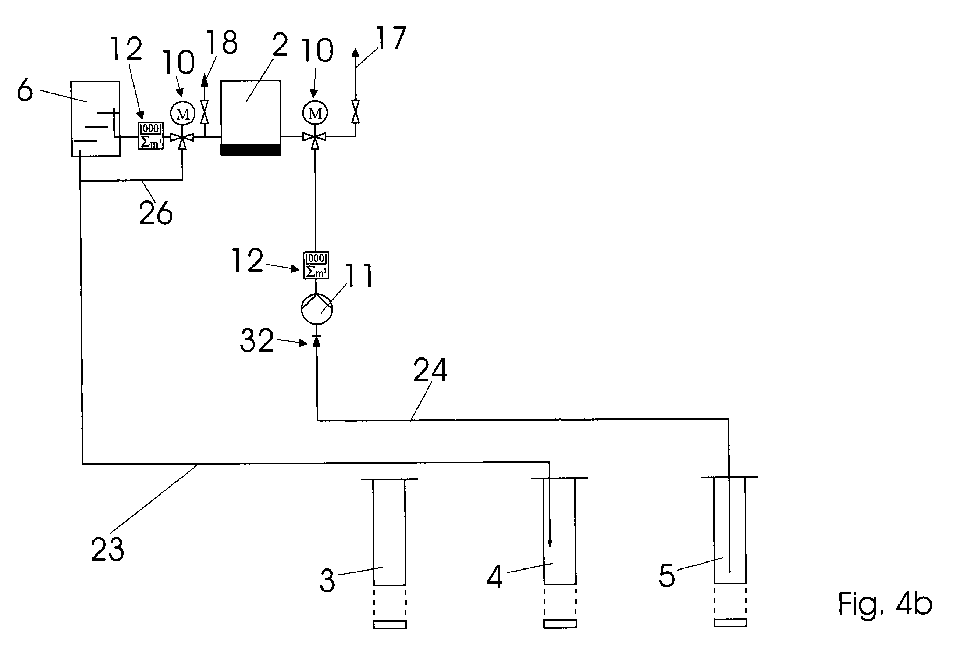

Nach einer entsprechenden Betriebszeit bzw. einem entsprechenden Mengendurchsatz in dieser Konfiguration wird umgeschaltet und nach Figur 4b im Prinzip in gleicher Weise über Brunnen 5 Grundwasser gefördert und das in seiner Wärmeenergie veränderte und ganz oder teilweise mit Sauerstoff angereicherte Wasser über Brunnen 4 als Schluckbrunnen in den Grundwasserleiter zurückgeführt. Brunnen 3 ist jetzt als Standby-Brunnen förderbereit und der Grundwasserleiter im Bereich dieses Brunnens im entsprechenden Temperaturausgleich.

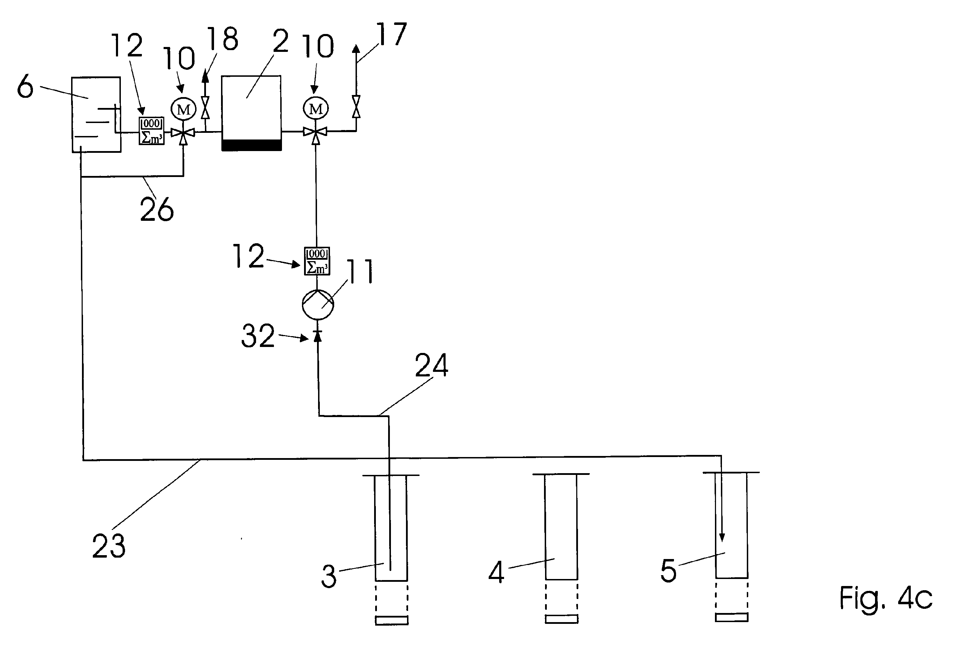

Nach einer entsprechenden Betriebszeit bzw. einem entsprechenden Mengendurchsatz in dieser Konfiguration wird erneut umgeschaltet und nach Figur 4c im Prinzip in gleicher Weise über Brunnen 3 Grundwasser gefördert und das in seiner Wärmeenergie veränderte und ganz oder teilweise mit Sauerstoff angereicherte Wasser über Brunnen 5 als Schluckbrunnen in den Grundwasserleiter zurückgeführt. Brunnen 4 ist jetzt als Standby-Brunnen förderbereit und der Grundwasserleiter im Bereich dieses Brunnens im entsprechenden Temperaturausgleich. Jeder der Brunnen 3, 4, 5 wird somit nacheinander auf die Funktionen Förderbrunnen, Infiltrationsbrunnen und Schluckbrunnen geschaltet. Die Umschaltung kann vorteilhaft mengenabhängig nach den in den Zählern 12 gemessenen Werten erfolgen. Eine andere, z.B. zeitabhängige Umschaltung ist denkbar. Diese beschriebene Verschaltung nach Figur 4a bis 4c ist besonders vorteilhaft für den reinen Betrieb von Wasser-Wasser-Wärmepumpen bei mittlerem Gehalt an oxidierbaren Stoffen wie Eisen und/oder Mangan ohne Entnahme größerer Wassermengen für z.B. Haushalt, Landwirtschaft, Gewerbe, kommunale Betriebe etc. Dem Vorteil der hohen Energieeinsparung der Wasser-Wasser-Wärmepumpe 2 gegenüber der Sole-Wasser-Wärmepumpe steht fast kein Energieaufwand für die Wasseraufbereitung gegenüber.

Bei Grundwässern mit sehr hohem Gehalt an oxidierbaren Stoffen wie Eisen und/oder Mangan und/oder höherer Wasserentnahme für z.B. o.a. andere Zwecke ist eine Verschaltung nach Figur 5a bis 5c unter Beibehaltung der Aufbereitungsanlage 1 auch über die Einfahrphase hinaus vorteilhaft.

In Figur 5a wird bei einer Förderung über Brunnen 4, Leitung 24, einen oder zwei Zähler 12, einen oder zwei Rückflussverhinderer 32, eine oder zwei der Pumpen 11 und ein oder zwei Stellventile 10 der Förderstrom aufgeteilt, so dass ein Teilstrom über die Aufbereitungsanlage 1 geleitet und dabei über das Absperrorgan 10 dem Injektor 29 mit Luftfilter/Luftsieb 14 zugeführt und hier mit Luftsauerstoff im Überschuss angereichert wird. Nach dem Austrag überschüssiger Luft in der Anlage 1 wird das mit Sauerstoff angereicherte Wasser über das Absperrorgan 16, den Zähler 12, die Pumpe 11, die Leitung 25 und den Brunnen 5 in den Grundwasserleiter infiltriert.

Die andere Teilwassermenge wird in der Wasser-Wasser-Wärmepumpe 2 in seiner Wärmeenergie verändert und nach einem Regelorgan 10 und einem Zähler 12 ganz oder teilweise in einer sekundären Sauerstoffanreicherung 6 mit Sauerstoff aus der Umgebungsluft angereichert und über Leitung 23 und Bohrbrunnen 3 in der Funktion als Schluckbrunnen in den Grundwasserleiter rückgeführt.

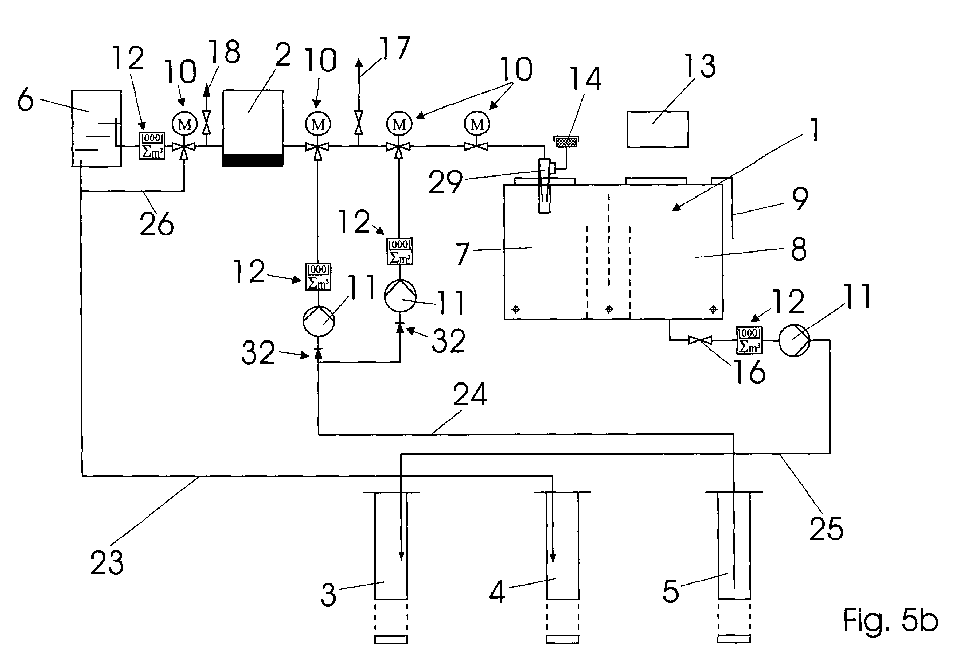

Nach einer entsprechenden Betriebszeit bzw. einem entsprechenden Mengendurchsatz in dieser Konfiguration wird umgeschaltet und nach Figur 5b im Prinzip in gleicher Weise über Brunnen 5 Grundwasser gefördert, über Brunnen 3 die primär in der Aufbereitungsanlage 1 mit Sauerstoff angereicherte Teilwassermenge in den Grundwasserleiter infiltriert und die in seiner Wärmeenergie in der Wasser-Wasser-Wärmepumpe 2 veränderte und in der sekundären Sauerstoffanreicherung 6 ganz oder teilweise mit Sauerstoff angereicherte Teilwassermenge über Brunnen 4 als Schluckbrunnen in den Grundwasserleiter zurückgeführt.

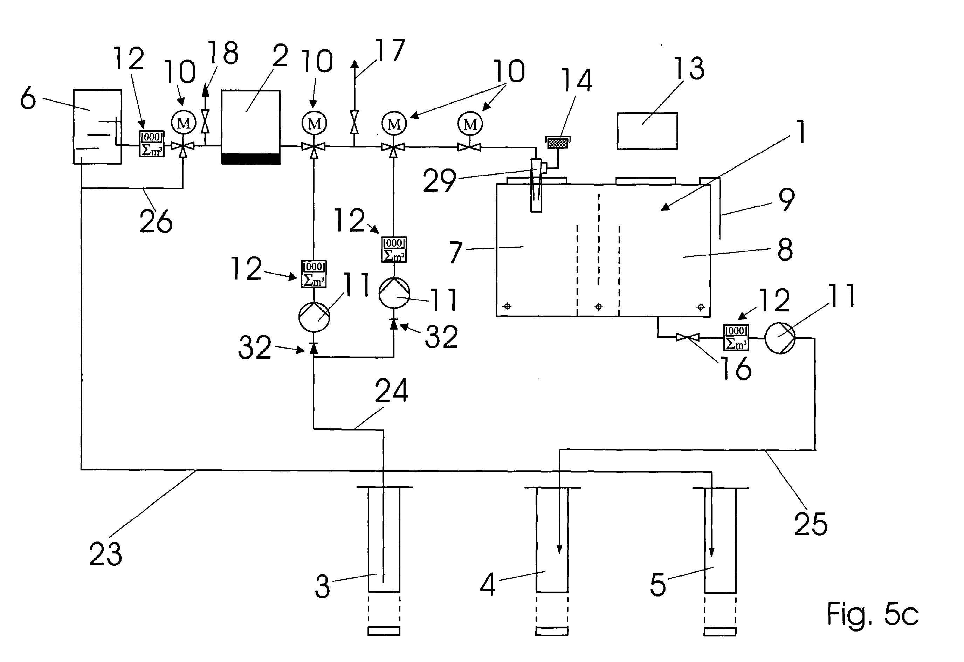

Nach einer weiteren entsprechenden Betriebszeit bzw. einem entsprechenden Mengendurchsatz in dieser Konfiguration wird erneut umgeschaltet und nach Figur 5c über Brunnen 3 Grundwasser gefördert, über Brunnen 4 eine primär mit Sauerstoff angereicherte Teilwassermenge in den Grundwasserleiter infiltriert und die in seiner Wärmeenergie in der Wasser-Wasser-Wärmepumpe 2 veränderte und in der sekundären Sauerstoffanreicherung 6 ganz oder teilweise mit Sauerstoff angereicherte Teilwassermenge über Brunnen 5 als Schluckbrunnen in den Grundwasserleiter zurückgeführt.

Zur Ausgestaltung und Zuordnung der Einzelkomponenten besteht eine Vielfalt an Möglichkeiten bei Wahrung der erfinderischen Funktionen. So ist es z.B. nahe liegend, anstelle der in den Figuren dargestellten oberirdischen Pumpen für die Entnahme von Wasser über den jeweiligen Förderbrunnen aus dem Grundwasserleiter Unterwasserpumpen einzusetzen etc.

### Sachnummernliste

- 1: - Anlage zur unterirdischen Aufbereitung von Grundwasser
- 2: - Wasser-Wasser-Wärmepumpe
- 3: - Brunnen
- 4: - Brunnen
- 5: - Brunnen
- 6: - Sauerstoffanreicherung Wärmepumpe
- 7: - Eintrittskammer der Aufbereitungsanlage
- 8: - Entlüftungsbehälter
- 9: - Entlüftung
- 10: - Absperr- und / oder Regelorgan, motorisch fernbetätigt dargestellt
- 11: - Pumpe
- 12: - Durchflusszähler
- 13: - Regelung
- 14: - Luftsieb / Filter
- 16: - Absperrorgan
- 17: - Wasserentnahme bei Fördertemperatur
- 18: - Wasserentnahme bei reduzierter Temperatur
- 23: - Leitung
- 24: - Leitung
- 25: - Leitung
- 26: - Leitung Bypasseinrichtung
- 29: - primäre Sauerstoffanreicherung
- 32: - Rückflussverhinderer

## Patentansprüche

1. Verfahren zur Entfernung oder Minderung oxidierbarer gelöster Stoffe, insbesondere von Eisen und Mangan, aus dem Grundwasser zur Vermeidung von Ablagerungen und damit von Betriebsstörungen bei direkter Nutzung von Grundwasser für Wasser-Wasser-Wärmepumpen für Heiz- und/oder Kühlzwecke durch Einleitung von mit Sauerstoff angereichertem Wasser in den Grundwasserleiter,
**dadurch gekennzeichnet, dass**
in einer Einfahrphase aus einer Mehrzahl von mindestens drei Brunnen (3, 4, 5) zunächst zwei Brunnen (3, 4, 5) wechselweise als Förder- und Infiltrationsbrunnen arbeiten, wobei über den Förderbrunnen Grundwasser aus dem Grundwasserleiter entnommen wird, von dem ein Teilstrom in einer primären Sauerstoffanreicherung (29) mit Sauerstoff angereichert und über den Infiltrationsbrunnen (3, 4, 5) in den Grundwasserleiter infiltriert wird,
und gleichzeitig der Hauptstrom des über den jeweiligen Förderbrunnen (3, 4, 5) entnommenen Wassers
beim Durchströmen einer Wasser-Wasser-Wärmepumpe (2) für Heiz- und/oder Kühlzwecke hinsichtlich seiner enthaltenen Wärmeenergie verändert wird,
in Durchströmungsrichtung vor und/oder nach der Wasser-Wasser-Wärmepumpe (2) in einer sekundären Sauerstoffanreicherung (6) mit Sauerstoff angereichert und
über einen als Schluckbrunnen dienenden Brunnen (3, 4, 5) aus einer Mehrzahl von mindestens drei Brunnen (3, 4, 5) in den Grundwasserleiter zurückgeführt wird, wobei
im darauf folgenden Dauerbetrieb nach hinreichender Reduzierung des Eisen- und Mangangehaltes im jeweils geförderten Wasser dieser Schluckbrunnen (3, 4, 5) in den Funktionswechsel der Brunnen mit einbezogen wird, so dass jeder der Brunnen (3, 4, 5) im Wechsel Infiltrationsbrunnen, Förderbrunnen und Schluckbrunnen wird und zwischen den Funktionen als Schluckbrunnen und als Förderbrunnen durch eine zeitlich ausreichende Phase ein entsprechender Temperaturausgleich im Grundwasserleiter im Bereich des jeweiligen Brunnens berücksichtigt wird.

2. Verfahren nach einem der vorstehenden Ansprüche, **dadurch gekennzeichnet, dass** in den Funktionswechsel der Brunnen (3, 4, 5) der Schluckbrunnen bereits im ersten Einfahrzyklus einbezogen wird.

3. Verfahren gemäß Ansprüch 1 und 2, **dadurch gekennzeichnet, dass** nach einer vorangegangenen Einfahrphase die primäre Sauerstoffanreicherung (29) und damit die Rückführung eines Teilwasserstromes über den jeweiligen Infiltrationsbrunnen (3, 4, 5) eingestellt wird.

4. Verfahren gemäß Anspruch 1 oder 2, **dadurch gekennzeichnet, dass** nach einer vorangehenden Einfahrphase die primäre Sauerstoffanreicherung (29) und damit die Rückführung eines Teilwasserstromes über den jeweiligen Infiltrationsbrunnen (3, 4, 5) in den Grundwasserleiter weiter betrieben wird.

5. Verfahren gemäß Anspruch 1 oder 2, **dadurch gekennzeichnet, dass** nach einer vorangegangenen Einfahrphase die primäre Sauerstoffanreicherung (29) und damit die Rückführung eines Teilwasserstromes über den jeweiligen Infiltrationsbrunnen (3, 4, 5) in den Grundwasserleiter in gegenüber der Einfahrphase reduziertem Umfang weiter betrieben wird.

6. Verfahren gemäß Anspruch 5, **dadurch gekennzeichnet, dass** der reduzierte Umfang der primären Sauerstoffanreicherung (29) und Rückführung eines Teilwasserstromes über den jeweiligen Infiltrationsbrunnen (3, 4, 5) in den Grundwasserleiter für jeden Brunnen (3, 4, 5) einzeln, insbesondere nach den aus den Rohwasseranalysen zu errechnenden Ergiebigkeitsfaktoren K_{E}, gewählt wird.

7. Verfahren nach einem der vorstehenden Ansprüche, **dadurch gekennzeichnet, dass** eine Infiltration einer Teilwassermenge über den Infiltrationsbrunnen nur zum Zweck eines besseren Temperaturausgleiches erfolgt.

8. Verfahren nach einem der vorstehenden Ansprüche, **dadurch gekennzeichnet, dass** die sekundäre Sauerstoffzuführeinrichtung (6) nur mit einer Anreicherung auf einen reduzierten Sauerstoffgehalt betrieben wird.

9. Verfahren nach einem der vorstehenden Ansprüche, **dadurch gekennzeichnet, dass** ein Einfahrbetrieb des Aufbereitungssystems zunächst ohne den Betrieb der Wasser-Wasser-Wärmepumpe (2) gefahren wird, indem eine bestimmte Wasserableitung über die Entnahme (17) erfolgt.

10. Verfahren nach einem der vorstehenden Ansprüche, **dadurch gekennzeichnet, dass** die Umschaltung der einzelnen Brunnen (3, 4, 5) auf Infiltrationsbrunnen, Förderbrunnen und Schluckbrunnen zeitgesteuert erfolgt.

11. Verfahren nach einem der Ansprüche 1 bis 10, **dadurch gekennzeichnet, dass** die Umschaltung der einzelnen Brunnen (3, 4, 5) auf Infiltrationsbrunnen, Förderbrunnen und Schluckbrunnen verbrauchsabhängig geregelt wird.

12. Verfahren nach einem der Ansprüche 1 bis 10, **dadurch gekennzeichnet, dass** die Umschaltung der einzelnen Brunnen (3, 4, 5) auf Infiltrationsbrunnen, Förderbrunnen und Schluckbrunnen zeit- und mengenabhängig erfolgt.

13. Verfahren gemäß einem der vorstehenden Ansprüche, **dadurch gekennzeichnet, dass** bei sommerlichem Kühlbetrieb von der Wasser-Wasser-Wärmepumpe (2) an das Grundwasser abgegebene Wärme in den Grundwasserleiter eingetragen, und beim winterlichen Wärmebetrieb wieder zur Verbesserung des Wirkungsgrades der Wasser-Wasser-Wärmepumpe (2) genutzt wird.

14. Verfahren gemäß einem der vorstehenden Ansprüche, **dadurch gekennzeichnet, dass** in der Einfahrphase der unterirdischen Enteisenung und Entmanganung zwei der drei Brunnen (3, 4, 5) als Förderbrunnen und Infiltrationsbrunnen in relativ kurzem Funktionswechsel betrieben werden, die nicht über den Infiltrationsbrunnen rückgeführte Wassermenge der Wasser-Wasser-Wärmepumpe (2) zugeführt, sekundär mit Sauerstoff angereichert und über den Schluckbrunnen in den Grundwasserleiter rückgeführt wird.

15. Verfahren gemäß einem der vorstehenden Ansprüche, **dadurch gekennzeichnet, dass** der Eintrag von Sauerstoff in der primären Sauerstoffanreicherung (29) nach dem Injektionsprinzip mittels Rieselbelüftung oder dgl. Verfahren vorgenommen wird.

16. Verfahren gemäß einem der vorstehenden Ansprüche, **dadurch gekennzeichnet, dass** der Eintrag von Sauerstoff (6) vor und/oder nach der Wasser-Wasser-Wärmepumpe (2) in das die Wasser-Wasser-Wärmepumpe (2) durchströmende Wasser nach dem Injektorprinzip, mittels Rieselbelüftung oder dgl. Verfahren vorgenommen wird.

17. Verfahren gemäß einem der vorstehenden Ansprüche, **dadurch gekennzeichnet, dass** durch die sekundäre Sauerstoffanreicherung (6) nach der Wasser-Wasser-Wärmepumpe (2) das verbesserte Gas-Lösungsvermögen von Wasser bei niedrigeren Temperaturen genutzt und bei gleichem Druck eine höhere Anreicherung des Wassers mit Sauerstoff als bei Fördertemperatur des Wassers erreicht wird.

18. Verfahren gemäß einem der vorstehenden Ansprüche, **dadurch gekennzeichnet, dass** die primäre Sauerstoffanreicherung (29) und/oder sekundäre Sauerstoffanreicherung (6) mit Sauerstoff aus der Umgebungsluft erfolgt.

19. Verfahren gemäß einem der Ansprüche 1 bis 17, **dadurch gekennzeichnet, dass** für die primäre Sauerstoffanreicherung (29) und/oder die sekundäre Sauerstoffanreicherung (6) anstelle von Luftsauerstoff technischer Sauerstoff eingesetzt wird.

20. Verfahren gemäß einem der vorstehenden Ansprüche, **dadurch gekennzeichnet, dass** die Mehrzahl von Brunnen (3, 4, 5) und die Einrichtung (1) zur Durchführung eines Verfahrens zur unterirdischen Enteisenung und/oder Entmanganung sowie die Wasser-Wasser-Wärmepumpe (2) derart miteinander funktional verbunden und verschaltbar sind, dass ohne Umbau ein Betrieb jedes Brunnens (3, 4, 5) als Infiltrationsbrunnen Förderbrunnen oder als Schluckbrunnen sowohl mit der Einrichtung (1) zur Durchführung eines Verfahrens zur unterirdischen Enteisenung und/oder Entmanganung als auch mit der Wasser-Wasser-Wärmepumpe (2) realisiert werden kann.

21. Verfahren gemäß einem der vorstehenden Ansprüche, **dadurch gekennzeichnet, dass** aus dem Förderbrunnen (3, 4, 5) gefördertes Wasser auch für Trinkwasserzwecke oder für sonstige Zwecke genutzt werden kann.

22. Verfahren gemäß einem der vorstehenden Ansprüche, **dadurch gekennzeichnet, dass** aus dem Entnahmebrunnen (3, 4, 5) gefördertes Wasser vor und/oder nach dem Durchströmen der Wasser-Wasser-Wärmepumpe (2) auf zwei unterschiedlichen Temperaturniveaus (17, 18) für Trinkwasser oder sonstige Zwecke entnommen werden kann.

23. Verfahren gemäß einem der vorstehenden Ansprüche, **dadurch gekennzeichnet, dass** das Wasser für Trinkwasser oder sonstige Zwecke nach der Einstellung der Infiltration von primär mit Sauerstoff angereichertem Wasser über den jeweiligen Infiltrationsbrunnen entnommen wird, um den Temperaturausgleich im Grundwasserleiter zu verbessern.

24. Verfahren gemäß einem der vorstehenden Ansprüche, **dadurch gekennzeichnet, dass** die Wasser-Wasser-Wärmepumpe (2) dem geförderten Wasser Wärmeenergie entnimmt und für Heizzwecke oder dgl. zur Verfügung stellt.

25. Verfahren gemäß einem der Ansprüche 1 bis 23, **dadurch gekennzeichnet, dass** die Wasser-Wasser-Wärmepumpe (2) dem geförderten Wasser Wärmeenergie hinzufügt und für Kühlzwecke oder dgl. Kälte zur Verfügung stellt.

26. Vorrichtung zur Durchführung des Verfahrens gemäß Anspruch 1, aufweisend eine Einrichtung (1) zur unterirdischen Enteisenung und/oder Entmanganung mit mit Sauerstoff angereichertem Wasser, eine Wasser-Wasser-Wärmepumpe (2) sowie eine sekundäre Sauerstoffzuführeinrichtung (6), die vor und/oder nach der Wasser-Wasser-Wärmepumpe (2) derart angeordnet ist, dass das die Wasser-Wasser-Wärmepumpe (2) durchströmende Wasser mit Sauerstoff angereichert und dann dem Schluckbrunnen (3, 4, 5) zugeführt wird.

27. Vorrichtung gemäß Anspruch 26, **dadurch gekennzeichnet, dass** die Vorrichtung derartige fluidische Verbindungen (23, 24, 25, 26), Stellelemente (10), Pumpen (11) und Zähler (12) aufweist, dass mit den Brunnen (3, 4, 5) und der Einrichtung (1) zur Durchführung eines Verfahrens zur unterirdischen Enteisenung und/oder Entmanganung sowie der Wasser-Wasser-Wärmepumpe (2) ohne Umbau ein Betrieb jedes Brunnens (3, 4, 5) als Infiltrationsbrunnen oder als Förderbrunnen oder als Schluckbrunnen sowohl mit der Einrichtung (1) zur Durchführung eines Verfahrens zur unterirdischen Enteisenung und/oder Entmanganung als auch mit der Wasser-Wasser-Wärmepumpe (2) realisierbar ist.

28. Vorrichtung gemäß einem der Ansprüche 26 oder 27, **dadurch gekennzeichnet, dass** die Vorrichtung vor und/oder nach der Wasser-Wasser-Wärmepumpe (2) Entnahmestellen (17, 18) für gefördertes Wasser aufweist.

29. Vorrichtung gemäß einem der Ansprüche 26 bis 28, **dadurch gekennzeichnet, dass** für die Entnahme von Wasser für Trinkwasserzwecke oder für sonstige Zwecke eine zusätzliche Pumpe eingesetzt wird.

30. Vorrichtung gemäß einem der Ansprüche 26 bis 29, **dadurch gekennzeichnet, dass** die sekundäre Sauerstoffzuführeinrichtung (6) eine Einrichtung zur Rieselbelüftung aufweist.

31. Vorrichtung gemäß einem der Ansprüche 26 bis 30, **dadurch gekennzeichnet, dass** der sekundären Sauerstoffzuführeinrichtung (6) eine Entlüftung nachgeschaltet ist.

32. Vorrichtung gemäß einem der Ansprüche 26 bis 31, **dadurch gekennzeichnet, dass** der Sauerstoff für die sekundäre Sauerstoffzuführeinrichtung (6) der Umgebungsluft entnehmbar ist.

33. Vorrichtung gemäß einem der Ansprüche 26 bis 31, **dadurch gekennzeichnet, dass** der Sauerstoff für die sekundäre Sauerstoffzuführeinrichtung (6) als bevorrateter technischer Sauerstoff zuführbar ist.

34. Vorrichtung nach einem der Ansprüche 26 bis 33, **dadurch gekennzeichnet, dass** bei geänderten fluidischen Verbindungen (23, 24, 25) und geänderten Stellelementen (10) Unterwasserpumpen für die Förderung des Grundwassers eingesetzt werden.

35. Vorrichtung nach einem der Ansprüche 26 bis 34, **dadurch gekennzeichnet, dass** die Rückführung/Infiltration des in der primären Sauerstoffanreicherung (29) mit Sauerstoff angereicherten Wassers über die Saug- oder Druckleitungen der Pumpen erfolgt.

36. Vorrichtung nach einem der Ansprüche 26 bis 35, **dadurch gekennzeichnet, dass** die Rückführung des in der sekundären Sauerstoffanreicherung (6) mit Sauerstoff angereicherten Wassers über die Saug- oder Druckleitungen der Pumpen erfolgt.
